# DEMANDE DE BREVET EUROPEEN

(11) **EP 3 048 277 A1**
(43) Date de publication de la demande: **27.07.2016**
(21) Numéro de dépôt: 16150796.7
(22) Date de dépôt: 11.01.2016
(51) Int. Cl.: F01N 3/20, F01N 3/08, F02D 41/24, F02D 41/14

(54) **PROCÉDÉ DE CONTRÔLE D'UN MOTEUR À COMBUSTION INTERNE POURVU D'UN DISPOSITIF DE DÉPOLLUTION PAR RÉDUCTION CATALYTIQUE SÉLECTIVE**

(30) Priorité: 20.01.2015 FR 1550423
(71) Demandeur: Peugeot Citroën Automobiles SA, 78140 Vélizy-Villacoublay (FR)
(72) Inventeur: CLAVEL, GUILLAUME, 92000 NANTERRE (FR); BERNARD, YOAN, 78570 ANDRESY (FR); ZUMI, MICHEL, 92600 Asnières-sur-Seine (FR)

(57) **Abrégé**

L'invention concerne un procédé de contrôle d'un groupe motopropulseur comprenant un moteur (2) et son système de dépollution (4) d'un composé des gaz d'échappement dans lequel en fonctionnement selon un mode prédéterminé :
- on détermine une teneur cible (S_{cible_NOx}) du composé à ne pas dépasser en sortie de ligne d'échappement,

on estime pour chacun des modes :
- la teneur du composé produit par le moteur thermique,
- l'efficacité (E) maximum du système de dépollution,
- la teneur attendue du composé en aval du système de dépollution, à partir de la teneur attendue à la source et l'efficacité (E),
- on compare les teneurs estimées pour chacun des modes à la teneur cible (S_{cible_NOx}) et,
- on applique parmi les modes pour lequel la teneur estimée est inférieure à la teneur cible (S_{cible_NOx}), celui qui permet la moindre consommation de carburant.

## Description

L'invention a trait au domaine de la dépollution des gaz rejetés par les moteurs thermique.

Les gaz d'échappement des moteurs diesel contiennent des éléments polluants dont il est préférable de limiter les rejets dans l'atmosphère. Ces éléments polluants proviennent de la combustion du carburant diesel et comprennent des oxydes d'azote (couramment désignés sous l'acronyme NOx), du monoxyde de carbone (CO), du carburant imbrûlé ou encore des particules de suie.

Une fois la combustion terminée, les gaz d'échappement quittent le moteur et sont canalisés vers une ligne d'échappement, les gaz subissant plusieurs traitements par catalyse et filtration afin qu'en soient au moins partiellement extraits certains éléments nocifs.

L'élimination des NOx des gaz d'échappement peut être effectuée par différentes méthodes. L'une des méthodes est une solution de post-traitement ayant fait la preuve de son efficacité est l'utilisation d'une source d'ammoniac (NH₃). L'ammoniac réagit avec les NOₓ sur un catalyseur pour former de l'azote N₂ inerte et de l'eau H₂0. Cette solution est essentiellement connue sous le nom de son acronyme anglais SCR pour « Sélective Catalytic Réduction ». Le réducteur se présente par exemple sous la forme d'urée liquide en solution aqueuse.

Un tel système de post-traitement de type SCR présente cependant des limites physiques de traitement, et il est donc nécessaire dans certaines situations de limiter les émissions à la source pour atteindre une performance déterminée à la sortie de la ligne d'échappement afin de garantir par exemple les seuils réglementaire.

Cependant, limiter les émissions de NOx à la source conduit à dégrader le rendement énergétique de la chaine de traction et induit une augmentation de la consommation carburant et donc une augmentation des émissions de CO₂.

Les réglages de fonctionnement du moteur et de la boite de vitesse permettant un fonctionnement peu émissif en NOx et ceux permettant un comportement sobre en consommation présentent de fortes discontinuités, et ne permettent pas l'application d'une fonction de régulation simple entre ces différents états.

Les règles de décision pour passer d'un mode de fonctionnement peu émissif en NOx à un mode de fonctionnement sobre en carburant sont donc généralement calibrés sur des grandeurs d'environnement telle que la vitesse du véhicule, le temps depuis le démarrage, la température du catalyseur SCR, etc.

Le problème de cette méthode est qu'elle ne permet pas de trouver le juste compromis entre respect des émissions émises à sortie de la ligne d'échappement sur toutes les situation de vie du véhicule et consommation de carburant minimisée.

Il existe donc un besoin pour une stratégie de contrôle du fonctionnement groupe motopropulseur permettant de trouver ce juste compromis.

Un but de la présente invention est de proposer un procédé de contrôle d'un groupe motopropulseur comprenant :
- un moteur thermique relié à une ligne d'échappement dans laquelle est disposé un système de dépollution d'un composé des gaz d'échappement émis par le moteur,
- un calculateur de commande du groupe motopropulseur comprenant en mémoire plusieurs modes de fonctionnement distinct du groupe motopropulseur permettant des consommations de carburant distinctes pour une même situation de vie de référence, procédé caractérisé en ce que le groupe motopropulseur étant en fonctionnement et est régi par un des modes de fonctionnement prédéterminés :
- on détermine une teneur cible du composé dans les gaz d'échappement à ne pas dépasser en sortie de ligne (3) d'échappement,
- on estime pour chacun des modes de fonctionnement prédéterminés :
- la teneur du composé produit par le moteur thermique,
- l'efficacité maximum de dépollution du composé par le système de dépollution,
- la teneur attendue du composé en aval du système de dépollution, à partir de la teneur attendue à la source et l'efficacité maximum de dépollution associée,
- on compare les teneurs estimées (pour chacun des modes de fonctionnement prédéterminés à la teneur cible et,
- on applique parmi les modes de fonctionnement pour lequel la teneur estimée est inférieure à la teneur cible, celui qui permet la moindre consommation de carburant.

L'effet technique est qu'en disposant ainsi d'estimation d'émission à la source du mode de fonctionnement en cours, des autres modes de fonctionnement possibles, ainsi que de l'efficacité maximum accessible, il est alors possible de choisir le mode de fonctionnement le plus optimum pour atteindre la teneur cible en sortie de ligne d'échappement, tout en minimisant la consommation de carburant ainsi que la consommation d'agent réducteur.

Dans une variante, le composé est les oxydes d'azote, NOx.

Dans une autre variante, le moteur thermique est un moteur à allumage par compression.

Dans une autre variante, le système de dépollution comprend un organe de dépollution des oxydes d'azote par réduction catalytique sélective.

Dans une autre variante, chacun des modes de fonctionnement prédéterminés comprend un ensemble de réglage de la combustion du moteur thermique.

Dans une autre variante, où le groupe motopropulseur comprend de plus des moyens de transmission, les modes de fonctionnement du groupe motopropulseur sont des combinaisons entre les ensembles de réglage de la combustion du moteur thermique et des ensembles de réglage des moyens de transmission.

Dans une autre variante, on bascule de proche en proche du mode de fonctionnement courant au mode de fonctionnement à appliquer, suivant leur ordre de classement en émissions.

Dans une autre variante, où la teneur du composé est obtenue pour chaque mode de fonctionnement par un estimateur, on mesure la teneur courante du composé en aval du système de dépollution et on recale les estimateurs des modes de fonctionnement à partir de cette mesure.

Dans une autre variante, on mesure la teneur courante du composé en aval du système de dépollution, et on passe à l'étape d'estimation si la teneur mesurée du composé est inférieure à la teneur cible du composé dans les gaz d'échappement à ne pas dépasser en sortie de ligne d'échappement.

Dans une autre variante, on intègre l'écart entre la teneur mesurée du composé et la teneur cible depuis un démarrage du véhicule et / ou sur une fenêtre de temps glissante, puis on compare cet écart à un seuil déterminé et on passe à 'étape d'estimation si cet écart est inférieur au seuil déterminé.

De préférence, la fenêtre de temps est comprise entre 1000 et 2000 secondes.

L'invention a aussi pour objet un calculateur de commande d'un groupe motopropulseur caractérisé en ce qu'il comporte les moyens d'acquisition, de traitement par instructions logicielles stockées dans une mémoire et de commande requis à mise en oeuvre du procédé selon l'une quelconque des revendications précédentes.

L'invention a aussi pour objet un groupe motopropulseur comprenant un moteur thermique relié à des moyens de transmission, caractérisé en ce qu'il comprend un calculateur selon la revendication précédente.

### Brève description des dessins

D'autres particularités et avantages apparaîtront à la lecture de la description ci-après d'un mode particulier de réalisation, non limitatif de l'invention, faite en référence aux figures dans lesquelles :
- la figure 1 est une vue en perspective d'un véhicule automobile muni d'un système de dépollution,
- la figure 2 est une vue schématique d'un système de dépollution,
- la figure 3 est un schéma illustrant l'interaction des ensembles de réglages de combustion et des moyens de transmission sur la production d'oxydes d'azote.
- La figure 4 présente un exemple de choix du mode de fonctionnement optimum selon le procédé de l'invention.

### Description détaillée

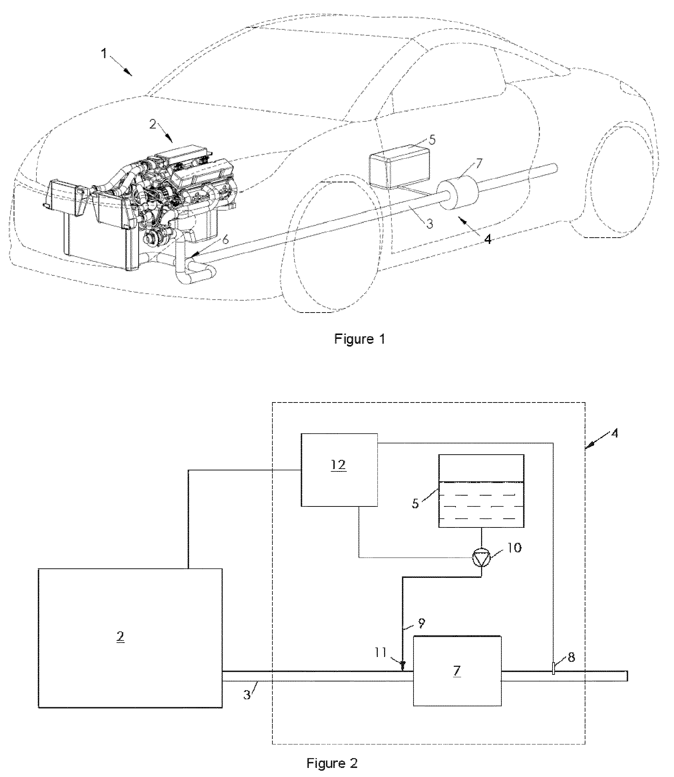

Le véhicule 1 automobile représenté en figure 1 comprend un groupe motopropulseur comprenant un moteur 2 à combustion interne à allumage par compression par exemple de type Diesel, associé des moyens de transmission (non représentés) reliés au moteur 2 et disposés entre ce moteur et les roues du véhicule. Les moyens de transmission peuvent notamment être une boîte de vitesses de type Boîte de Vitesses Manuelle (BVM), Boîte de Vitesses Automatisée (BVA), Boîte de Vitesses Manuelle Pilotée (BVMP) ou Boîte de Vitesses à Double Embrayage (en anglais « Double Clutch Transmission » ou DCT).

Le groupe motopropulseur comprend encore une ligne 3 d'échappement reliée au moteur 2 thermique. Les produits de la combustion contiennent, à la sortie des chambres de combustion du moteur 2, des gaz, notamment des oxydes d'azote (NOx). Les gaz d'échappement sont évacués du moteur 2 par la ligne 3 d'échappement. La ligne 3 d'échappement débute à la sortie des chambres de combustion par un collecteur 6 d'échappement permettant de collecter les gaz des chambres de combustion pour les réunir dans un seul conduit débouchant dans l'atmosphère.

La ligne 3 d'échappement comprend un système 4 de dépollution des oxydes d'azote, NOx, contenus dans les gaz d'échappement avant leur rejet dans l'atmosphère. Ce système 4 de dépollution est un système 4 de dépollution des oxydes d'azote par réduction catalytique sélective. A cet effet, il comprend un organe de dépollution des oxydes d'azote , ici un catalyseur de réduction catalytique sélectif 7 ou SCR conçu pour traiter les oxydes d'azote, NOx, et un réservoir 5 d'un agent réducteur des oxydes d'azote. L'agent réducteur des oxydes d'azote est de préférence de l'ammoniac ou un précurseur liquide de l'ammoniac tel qu'une solution aqueuse d'urée.

L'amont et l'aval étant ici défini relativement au sens d'écoulement des gaz d'échappement du moteur vers la sortie de la ligne d'échappement, le système 4 de dépollution, illustré de manière plus détaillée sur la figure 2, comprend également :
- une sonde 8 montée sur le conduit en aval du catalyseur 7 ayant pour fonction de mesurer le taux de NOx dans les gaz d'échappement,
- un circuit 9 d'injection raccordant le réservoir 5 d'agent réducteur des oxydes d'azote à la ligne 3 d'échappement, en amont du SCR 7.
- une pompe 10 d'injection disposée sur le circuit 9 d'injection et un injecteur 11 permettant de contrôler l'injection d'urée dans la ligne 3 d'échappement, en amont du SCR 7.
- une unité de commande électronique 12 à laquelle est connectée la sonde 8. L'unité de unité de commande électronique 12 est également agencée pour piloter la pompe 10 d'injection et injecteur 11 de sorte à piloter l'injection d'urée en solution aqueuse depuis le réservoir 5.

Cette unité de commande électronique 12 peut être intégré à un calculateur de contrôle moteur. Ce calculateur gère le fonctionnement du groupe motopropulseur. A cet effet, ce calculateur comprend les moyens d'acquisition, de traitement par instructions logicielles stockées dans une mémoire ainsi que les moyens de commande requis à mise en oeuvre du procédé de l'invention décrit plus loin.

Le principe de cette invention est de choisir parmi plusieurs modes de fonctionnement distincts possibles du groupe motopropulseur, celui représentant un optimum vis-à-vis du respect d'un seuil d'émission cible des oxydes d'azote à ne pas dépasser, tout en minimisant la consommation de carburant. Pour choisir le mode optimum, nous devons estimer non seulement les émissions d'oxydes d'azote à la sortie de la ligne 3 d'échappement obtenu dans le mode de fonctionnement en cours, mais aussi les émissions d'oxydes d'azote accessible pour l'ensemble des autres modes de fonctionnement possible du groupe motopropulseur.

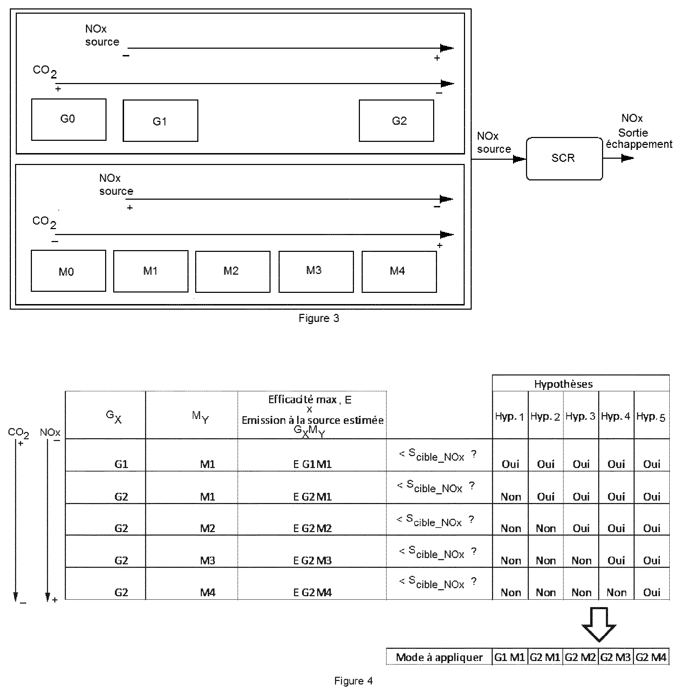

Dans le mode de réalisation illustré à la figure 3, le groupe motopropulseur comprend plusieurs ensembles de réglages de combustion possibles, ici quatre ensemble M1, M2, M3, M4, donnant dans l'ordre des seuils d'émission d'oxydes d'azote croissant mais qui en contrepartie donne des consommations de carburant, donc des émissions de CO₂ décroissantes. Comme déjà évoqué, réduire les émissions de NOx à la source conduit classiquement à dégrader le rendement énergétique et induit une augmentation de la consommation carburant et donc une augmentation des émissions de CO₂.

On peut prévoir un ensemble supplémentaire de réglages de combustion nominal M0, qui ne fait pas moins d'oxydes d'azote que M1, mais consomme plus, donc émet plus de CO₂ Il s'agit d'un mode permettant d'augmenter la performance du système de dépollution. Plus concrètement un catalyseur SCR a besoin d'être à une certaine Température pour être à son fonctionnement optimal. Si la thermique dans la ligne d'échappement est insuffisante on a alors un système pas suffisamment pour atteindre la cible requise de NOx en sortie de la ligne d'échappement. On peut alors décider d'activer ce mode M0 qui va permettre d'augmenter la température dans la ligne par le biais d'injections de carburant tardive dans le cycle de combustion qui brûleront dans la ligne d'échappement. Ce mode M0 ne fait donc pas moins de NOx amont mais il fait plus de CO2 car les injections tardives ne participent pas à la création de couple et donc la propulsion du véhicule.

Chaque ensemble de réglage de combustion M0, M1, M2, M3, M4, est défini en fonction du régime et de la charge du moteur 2 thermique. Un ensemble de réglage de combustion comprend par exemple des cartographies qui déterminent en fonction du régime et de la charge du moteur 2 thermique des paramètres influençant la combustion tel que la durée d'injection de carburant, l'avance à injection, la pression d'injection, le taux de gaz d'échappement recirculés, etc. Chaque ensemble de réglage de combustion est indépendant des autres pour faire fonctionner le groupe motopropulseur.

Dans le mode de réalisation illustré à la figure 3, le groupe motopropulseur comprend encore plusieurs ensembles de réglages des moyens de transmission, ici deux ensembles G1, G2, contribuant dans l'ordre à accroitre le seuil d'émission d'oxydes d'azote croissant mais qui en contrepartie contribue à diminuer la consommation de carburant, donc l'émission de CO₂.

On peut prévoir un ensemble supplémentaire de réglages de combustion nominal G0, qui ne fait pas moins d'oxydes d'azote que G1, mais consomme plus, donc émet plus de CO₂ pour les mêmes raisons que M0.

Chaque ensemble de réglage des moyens de transmission G0, G1, G2, est défini en fonction du régime et de la charge du moteur 2 thermique. Un ensemble de réglage de combustion comprend par exemple des cartographies qui déterminent en fonction du régime et de la charge du moteur 2 thermique le rapport de transmission. Chaque ensemble de réglage des moyens de transmission est indépendant des autres pour faire fonctionner le groupe motopropulseur.

La combinaison d'un des ensembles de réglages de combustion possibles M0, M1, M2, M3, M4 avec un des ensembles de réglages des moyens de transmission, G0, G1, G2, défini un mode de fonctionnement du groupe motopropulseur et donc un seuil d'émission d'oxydes d'azote, NOx, à la source, autrement dit à produits par le moteur 2 thermique. Ces oxydes d'azote produits par le moteur 2 thermique sont ensuite traités dans le catalyseur de réduction catalytique, SCR. La partie résiduelle des oxydes d'azote non traitée par le catalyseur de réduction catalytique, SCR s'échappe à la sortie de la ligne 3 d'échappement.

Les différents ensembles de réglages sont prédéterminés lors de la mise au point préalable du groupe motopropulseur et mis en mémoire dans l'unité de commande électronique 12. On a ainsi plusieurs modes de fonctionnement distincts du groupe motopropulseur permettant des consommations de carburant distinctes pour une même situation de vie de référence, autrement dit un même point de fonctionnement moteur défini classiquement par son régime et sa charge.

En référence à la figure 4 nous illustrons par un exemple le fonctionnement de l'invention.

Dans cet exemple, considérons que le groupe motopropulseur du véhicule est en cours de fonctionnement régit selon le mode de fonctionnement combinant l'ensemble de réglage des moyens de transmission, G1 avec l'ensemble de réglage de combustion M1.

Les combinaisons possibles G_{X}M_{Y} entre les ensembles de réglage des moyens de transmission et les ensembles de réglage de combustion sont classées dans le tableau de la figure 4 de haut en bas de la moins émissive à la plus émissive en oxydes d'azote, NOx, ce qui revient dans notre cas à un classement du plus consommateur au moins consommateur de carburant et donc du plus au moins émissif en CO₂. Par plus ou moins émissif on entend ici par rapport à une référence qui par exemple peut être la moyenne des émissions sur l'ensemble des points du champ moteur (régime, charge)
- on détermine une teneur cible, S_{cible_NOx}, d'oxydes d'azote dans les gaz d'échappement à ne pas dépasser en sortie de ligne d'échappement,

Pour estimer les émissions d'oxydes d'azote en sortie de ligne d'échappement de chacun des modes de fonctionnement :
- On estime pour le mode de fonctionnement en cours G1 M1, et aussi pour les autres modes de fonctionnement possibles qui sont des combinaisons entre les ensembles de réglage des moyens de transmission possibles, G1, G2 avec les ensembles de réglage de combustion M1, M2, M3, M4, les émissions d'oxydes d'azote produites à la source, par le moteur 2 thermique.
- On estime pour chacun de ces modes de fonctionnement possibles l'efficacité maximum E de dépollution du système 4 de dépollution des oxydes d'azote, NOx. L'estimation de l'efficacité maximum peut être obtenue par un estimateur pour chacun de ces modes de fonctionnement possibles pouvant se présenter sous la forme d'un modèle d'efficacité système 4 de dépollution des oxydes d'azote ou d'une cartographie.

Pour chaque combinaison accessible entre un ensemble de réglage de combustion, M_{X}, avec un ensemble de réglage des moyens de transmission, G_{Y}, on estime ensuite à partir de l'efficacité E et les émissions d'oxydes d'azote produites à la source, par le moteur 2 thermique les oxydes d'azote en aval du système de post traitement : valeur EG_{X}M_{Y}.

Ces valeurs sont comparée à la teneur cible, S_{cible_NOx}, d'oxydes d'azote dans les gaz d'échappement à ne pas dépasser en sortie de ligne d'échappement.

Les résultats donnent ensuite la meilleure combinaison à appliquer :
Dans la première hypothèse, seule la première combinaison G1 M1 permet d'obtenir une teneur d'oxydes d'azote en sortie de ligne d'échappement inférieure à la teneur cible, S_{cible_NOx}. Dans ce cas, on reste donc dans le mode de fonctionnement courant G1M1.

Dans la seconde hypothèse, les deux premières combinaisons G1 M1 et G2M1 permettent d'obtenir une teneur d'oxydes d'azote en sortie de ligne d'échappement inférieure à la teneur cible, S_{cible_NOx}. Dans ce cas on applique de ces deux combinaisons la plus émissive en oxyde d'azote mais qui par conséquent permet la consommation la plus faible, donc ici G2M1.

Il en va de même pour les autres hypothèses 3 à 5. Ainsi on retient parmi les combinaisons G_{X}M_{Y} qui permettent d'obtenir une teneur d'oxydes d'azote en sortie de ligne d'échappement inférieure à la teneur cible, S_{cible_NOx}, celle qui permet la consommation la plus faible et on retient et on applique ce mode de fonctionnement au groupe motopropulseur.

Ainsi, si le mode de mode de fonctionnement en cours permet de respecter la teneur cible S_{cible_NOx}, alors on tente de basculer vers un des modes de fonctionnement G_{X}M_{Y} possibles plus émissif en NOx, mais respectant toujours la teneur cible S_{cible_NOx}, et plus sobre en consommation de carburant.

Si ce n'est pas le cas, alors on basculera vers un mode de fonctionnement G_{X}M_{Y} moins émissif en oxydes d'azote mais moins sobre en consommation de carburant car la première priorité est le respect de la teneur cible S_{cible_NOx}, qui peut être un seuil réglementaire.

L'invention ne se limite pas à l'exemple de réalisation décrit. En variante, on peut prévoir dans une variante, de basculer progressivement du mode de fonctionnement courant au mode de fonctionnement à appliquer en passant de proche en proche, c'est-à-dire en suivant leur ordre de classement en émission, par les mode de fonctionnement intermédiaires, s'il y en a. Par exemple en reprenant l'exemple illustré par la figure 4 l'hypothèse 4 est avérée, le mode de fonctionnement initial étant le mode G0M0 et le mode retenu à appliquer étant le mode G2M2, entre ces deux modes, par émission d'oxydes d'azote croissante on trouve G1 M1 puis G2M1. Dans cette variante, on basculera donc de G0M0 à G1 M1 puis de G1M1 à G2M1 puis enfin de G2M1 à G2M2.

Dans une autre variante, on peut prévoir de mesurer par la sonde 8 la teneur courante d'oxydes d'azote dans les gaz d'échappement en aval de l'organe de dépollution 7 du système 4 de dépollution, et d'utiliser cette mesure d'oxydes d'azote pour recaler les estimateurs d'oxydes d'azotes des différents modes de fonctionnement possibles.

Dans une autre variante, on peut prévoir de mesurer par la sonde 8 la teneur courante du composé en aval de l'organe de dépollution 7 du système 4 de dépollution, et on passe à l'étape d'estimation des teneurs du composé pour chacun des modes de fonctionnement prédéterminés si la teneur mesurée du composé est inférieure à la teneur cible du composé dans les gaz d'échappement à ne pas dépasser en sortie de ligne d'échappement.

Dans une autre variante, on peut prendre en compte l'historique d'émission du composé sur tout ou partie de la durée de fonctionnement du moteur pour s'assurer de ne pas dépasser le seuil cible. A cet effet on peut prévoir d'intégrer dans le temps l'écart entre la teneur mesurée du composé en aval de l'organe de dépollution 7 du système 4 de dépollution et la teneur cible depuis un démarrage du véhicule et / ou sur une fenêtre de temps glissante, puis de comparer cet écart à un seuil déterminé et de passer à à l'étape d'estimation des teneurs du composé pour chacun des modes de fonctionnement prédéterminés si cet écart est inférieur au seuil déterminé. Par fenêtre glissante, on entend une fenêtre de temps sur un durée précédent immédiatement l'instant courant de fonctionnement. Cette fenêtre de temps peut être comprise entre 1000 et 2000 secondes.

Dans une autre variante simplifiée, par exemple dans le cas d'une boite de vitesse mécanique le mode de fonctionnement peut ne pas comprendre d'ensemble de réglage des moyens de transmission.

Dans une autre variante le polluant dont il faut respecter la teneur peut être un autre composé que les oxydes d'azote tel quel monoxyde d'azote ou les hydrocarbures imbrûlés. Cas ce cas le système de dépollution est un catalyseur approprié.

Le procédé de l'invention permet de choisir un mode de fonctionnement adapté à chaque situation de vie qui garantit de respecter un seuil cible d'émission, de minimiser la consommation de carburant.

Ce procédé permet également de minimiser la consommation d'urée et donc le fonctionnement du système de post-traitement SCR. La longévité et la fiabilité du système de post-traitement SCR s'en trouve donc améliorée. Le coût pour l'utilisateur est également diminué.

## Revendications

1. Procédé de contrôle d'un groupe motopropulseur comprenant :
- un moteur (2) thermique relié à une ligne (3) d'échappement dans laquelle est disposé un système (4) de dépollution d'un composé des gaz d'échappement émis par le moteur (2),
- un calculateur de commande du groupe motopropulseur comprenant en mémoire plusieurs modes de fonctionnement distinct du groupe motopropulseur permettant des consommations de carburant distinctes pour une même situation de vie de référence, procédé **caractérisé en ce que** le groupe motopropulseur étant en fonctionnement et est régi par un des modes de fonctionnement prédéterminés :
- on détermine une teneur cible (S_{cible_NOx}) du composé dans les gaz d'échappement à ne pas dépasser en sortie de ligne (3) d'échappement,
- on estime pour chacun des modes de fonctionnement prédéterminés :
- la teneur du composé produit par le moteur (2) thermique,
- l'efficacité (E) maximum de dépollution du composé par le système (4) de dépollution,
- la teneur (EG_{X}M_{Y}) attendue du composé en aval du système (4) de dépollution, à partir de la teneur attendue à la source et l'efficacité (E) maximum de dépollution associée,
- on compare les teneurs estimées (EG_{X}M_{Y}) pour chacun des modes de fonctionnement prédéterminés à la teneur cible (S_{cible_NOx}) et,
- on applique parmi les modes de fonctionnement pour lequel la teneur estimée (EG_{X}M_{Y}) est inférieure à la teneur cible (S_{cible_NOx}), celui qui permet la moindre consommation de carburant.

2. Procédé selon l'une quelconque des revendications précédentes dans lequel le composé est les oxydes d'azote (NOx).

3. Procédé selon l'une quelconque des revendications précédentes dans lequel le moteur (2) thermique est un moteur à allumage par compression.

4. Procédé selon la revendication 2 ou la revendication 3 dans lequel le système de dépollution (4) comprend un organe de dépollution (7) des oxydes d'azote par réduction catalytique sélective.

5. Procédé selon l'une quelconque des revendications précédentes, **caractérisé en ce que** chacun des modes de fonctionnement prédéterminés comprend un ensemble de réglage de la combustion du moteur (2) thermique.

6. Procédé selon la revendication précédente, **caractérisé en ce que** le groupe motopropulseur comprenant de plus des moyens de transmission, les modes de fonctionnement du groupe motopropulseur sont des combinaisons entre les ensembles de réglage de la combustion du moteur (2) thermique et des ensembles de réglage des moyens de transmission.

7. Procédé selon l'une quelconque des revendications précédentes, **caractérisé en ce qu'**on bascule de proche en proche du mode de fonctionnement courant au mode de fonctionnement à appliquer, suivant leur ordre de classement en émissions.

8. Procédé selon l'une quelconque des revendications précédentes dans lequel, la teneur du composé étant obtenue pour chaque mode de fonctionnement par un estimateur, on mesure la teneur courante du composé en aval du système (4) de dépollution et on recale les estimateurs des modes de fonctionnement à partir de cette mesure.

9. Procédé selon l'une quelconque des revendications précédentes, **caractérisé en ce que** l'on mesure la teneur courante du composé en aval du système (4) de dépollution, et on passe à l'étape d'estimation si la teneur mesurée du composé est inférieure à la teneur cible (S_{cible_NOx}) du composé dans les gaz d'échappement à ne pas dépasser en sortie de ligne (3) d'échappement.

10. Procédé selon la revendication précédente, **caractérisé en ce que** :
- on intègre l'écart entre la teneur mesurée du composé et la teneur cible depuis un démarrage du véhicule et / ou sur une fenêtre de temps glissante,
- on compare cet écart à un seuil déterminé,
- on passe à l'étape d'estimation si cet écart est inférieur au seuil déterminé.

11. Procédé selon la revendication précédente, **caractérisé en ce que** la fenêtre de temps est comprise entre 1000 et 2000 secondes.

12. Calculateur de commande d'un groupe motopropulseur **caractérisé en ce qu'**il comporte les moyens d'acquisition, de traitement par instructions logicielles stockées dans une mémoire et de commande requis à mise en oeuvre du procédé selon l'une quelconque des revendications précédentes.

13. Groupe motopropulseur comprenant un moteur (2) thermique relié à des moyens de transmission, **caractérisé en ce qu'**il comprend un calculateur selon la revendication précédente.
